Europäisches Patentamt

European Patent Office

Office européen des brevets

(11) Veröffentlichungsnummer: **0 452 737 A1**

## (12) EUROPÄISCHE PATENTANMELDUNG

(21) Anmeldenummer: **91105318.9**

(22) Anmeldetag: **04.04.91**

(51) Int. Cl.5: **H01M 8/24**

(30) Priorität: **10.04.90 DE 4011506**

(43) Veröffentlichungstag der Anmeldung:
**23.10.91 Patentblatt 91/43**

(84) Benannte Vertragsstaaten:
**CH DE FR GB LI SE**

(71) Anmelder: **ABB PATENT GmbH**
**Kallstadter Strasse 1**
**W-6800 Mannheim 31(DE)**

(72) Erfinder: **Rohr, Franz Josef, Dr.**
**Forstweg 2**
**W-6941 Abtsteinach(DE)**

(74) Vertreter: **Rupprecht, Klaus, Dipl.-Ing. et al**
**c/o ABB Patent GmbH, Patentabteilung,**
**Postfach 10 03 51**
**W-6800 Mannheim 1(DE)**

(54) **Brennstoffzellenanordnung und Verfahren zu deren Herstellung.**

(57) Die Erfindung bezieht sich auf eine Brennstoffzellenanordnung (1), die als Kern einen Träger (2) aufweist, der von Hohlräumen (2H) durchsetzt ist, und auf dessen Oberflächen (2A und 2B) eine Vielzahl von Brennstoffzellen (1Z) angeordnet sind, welche über Leiterbahnen (4) seriell und parallel miteinander verschaltet sind. Der Träger (2) wird mittels Extronsionsverfahren hergestellt. Die Leiterbahnen (4) und Isolierschichten (6) werden mittels Siebdruck auf seine Oberflächen (2A und 2B) aufgebracht und durch sintern dauerhaft mit dem Träger (2) verbunden. Die aus einzelnen Schichten (10,11,12) aufgebauten Brennstoffzellen (1Z) werden mittels Foliengieß- und Siebdruckverfahren hergestellt und über eine Klebesinterung dauerhaft mit dem Träger (2) verbunden.

Fig. 1

Die Erfindung bezieht sich auf eine Brennstoffzellenanordnung mit einem Träger, auf dem wenigstens eine Brennstoffzelle angeordnet ist, gemäß dem Oberbegriff des Patentanspruches 1, sowie auf ein Verfahren zur Herstellung einer solchen Brennstoffzellenanordnung.

Eine solche Brennstoffzellenanordnung kann beispielsweise als Stromquelle genutzt werden. Aus der Informationsschrift "High Temperature Fuel Cells, Solid Electrolytes, Academie Press, N.Y., 1978, F.J. Rohr, ist eine keramische Brennstoffzelle mit einem sauerstoffionenleitenden Festelektrolyten sowie einer Anode und einer Kathode bekannt. Diese Einrichtung ermöglicht es, bei Temperaturen von mehr als 800 $^\circ$C die chemische Energie eines Brennstoffs, z.B. von vergaster Kohle, Erdgas oder Wasserstoff durch elektrochemische Oxidation mit Sauerstoff direkt in elektrische Energie umzuwandeln. Die Energieumwandlung erfolgt mit einem Wirkungsgrad, der größer als 50 % ist. Es sind Brennstoffzellenanordnungen bekannt, die durch das Zusammenfassen und in Reiheschalten von mehreren Brennstoffzellen gebildet werden. Diese Anordnungen sind für den dauerhaften Betrieb weniger geeignet, da sie bei der hohen Betriebstemperatur hohe Leistungsverluste infolge einer ungünstigen Abdichtungs- und Verbindungstechnik aufweisen.

Der Erfindung liegt ausgehend von diesem Stand der Technik die Aufgabe zugrunde, eine Brennstoffzellenanordnung mit verbesserter Leistungsdichte sowie ein Verfahren zur Herstellung der Anordnung aufzuzeigen.

Diese Aufgabe wird erfindungsgemäß durch den Patentanspruch 1 gelöst.
Ein Verfahren zur Herstellung der Brennstoffzellenanordnung ist in Patentanspruch 9 offenbart.

Die Brennstoffzellenanordnung kann aus seperat hergestellten Bauelementen zusammengefügt werden. Der Aufbau der Brennstoffzellenanordnung ermöglicht es, den Träger zusammen mit den Leiterbahnen, welche ein Netzwerk zur parallelen und seriellen Verschaltung der Brennstoffzellen bilden, und den erforderlichen Isolierschichten unabhängig von der Herstellung der Brennstoffzellen zu fertigen. In einem separaten Arbeitsvorgang können die scheibenförmigen Brennstoffzellen mittels Folien-Gießen und Siebdruck aus einzelnen Schichten aufgebaut und nach ihrer Fertigstellung mit dem Träger zusammengefügt werden. Weitere erfindungswesentliche Merkmale sind in den Unteransprüchen gekennzeichnet.

Die Erfindung wird nachfolgend anhand von schematischen Zeichnungen näher erläutert. Es zeigen:

Fig. 1    eine Brennstoffzellenanordnung,
Fig. 2    einen Träger für die Brennstoffzellenanordnung,
Fig. 3    eine Brennstoffzelle im Vertikalschnitt und
Fig. 4    einen Vertikalschnitt durch die Anordnung gemäß Fig. 1.

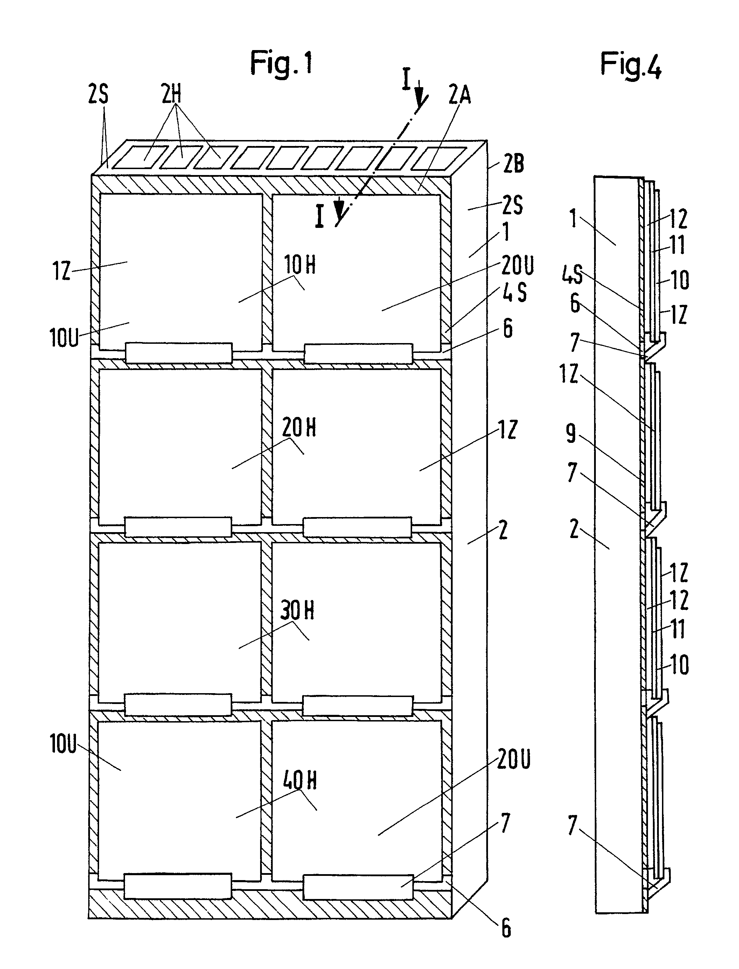

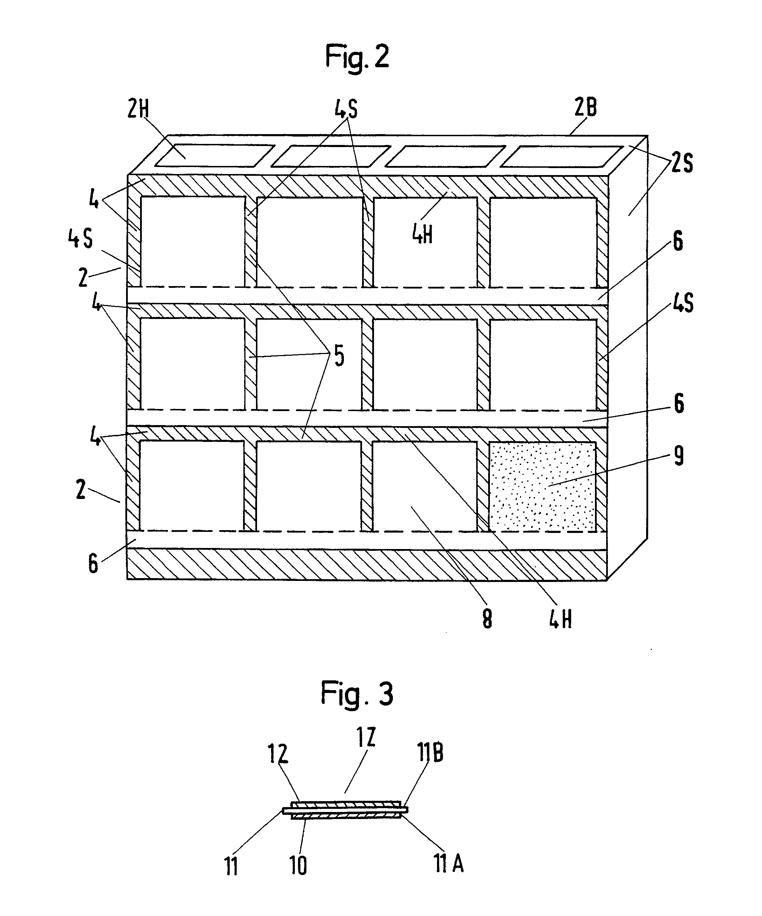

Fig. 1 zeigt eine Brennstoffzellenanordnung 1, die im wesentlichen durch Brennstoffzellen 1Z und einen Träger 2 gebildet wird. Der Träger 2 ist plattenförmig ausgebildet und aus einem porösen Material gefertigt. Im Inneren wird der Träger 2 von Hohlräumen 2H durchsetzt, die in definiertem Abstand voneinander angeordnet sind, und deren Längsachsen zueinander und zu den beiden Oberflächen 2A und 2B des Trägers 2 parallel verlaufen. Die Hohlräume 2H sind an beiden Enden des Trägers 2 nach außen hin offen, so daß Luft oder Sauerstoff durch sie hindurchgeleitet werden kann. Der in Fig. 1 dargestellte Träger 2 ist 20-50 cm lang und 10-30 cm breit. Seine Dicke beträgt 0,8- 1,8 cm. Seine Hohlräume 2H weisen einen Querschnitt von 0,5x1 bis 1,2x2,4 cm$^2$ auf. Der Abstand zweier Hohlräume 2H beträgt 0,1-0,2 cm. Der Träger 2 wird mittels Extrusionsverfahren hergestellt. Das zu seiner Fertigung verwendete Material besteht aus Zirkoniumoxid, das mit Kalziumoxid oder Magnesiumoxid stabilisiert ist. Der Anteil an Kalziumoxid bzw. Magenesiumoxid beträgt ca. 15 Mol % bezogen auf das molare Gesamtgewicht des verwendeten keramischen Materials. Anstelle von stabilisiertem Zirkoniumoxid kann auch Magnesium-Aluminiumspinell ($MgAl_2O_4$) verwendet werden. Andere temperatur- und korrosionsbeständige keramische Werkstoffe können ebenfalls benutzt werden, sofern ihr thermischer Ausdehnungkoeffizient bei 1000 $^\circ$C ebenfalls in der Nähe von 10 bis 11$\cdot$10$^{-6}$ Grad$^{-1}$ liegt, wie es bei den obengenannten Werkstoffen der Fall ist. Der Träger 2 weist eine Porosität auf, die bei 30 bis 45 % bezogen auf die theoretische Dichte des keramischen Werkstoffs liegt. Um diese Porosität zu erreichen, werden der Extrusionsmasse Porenbildner zugesetzt. Hierfür eignen sich Treibmittel in Form von Polyalkoholen oder Carbonaten. Diese Porenbildner werden beim Sintern der Keramik unter Bildung der Poren thermisch zersetzt. Wie anhand von Fig. 2 zu sehen ist, weist der Träger 2 auf seiner Oberfläche 2A Leiterbahnen 4 auf, die ein Netzwerk 5 bilden. Die Leiterbahnen 4 sind kammförmig ausgebildet und in definiertem Abstand untereinander angeordnet. Jeder horizontale Abschnitt 4H der Leiterbahn 4 erstreckt sich über die gesamte Breite des Trägers 2. Die zum jeweils horizontalen Leiterabschnitt 4H senkrecht angeordneten Leiterabschnitte 4S sind in definiertem Abstand voneinander angeordnet. Dieser Abstand beträgt bei dem hier dargestellten Ausführungsbeispiel 2-5 cm. Die Breite der horizontalen Leiterbahnabschnitte 4H beträgt 3-6 mm, während die senkrechten Leiterbahnabschnitte 4S 2-4 mm breit sind. Die Leiterbahnen 4 sind aus einem gasdichten, elektrisch leitenden Material in Form eines Perowskitmischoxids, beispielsweise aus Strontium dotiertem Lanthanchromit bzw. Magnesium oder Kalzium dotiertem Lanthanchromit hergestellt. Zur Erhöhung der elektrischen Leitfähigkeit werden die Leiterbahnen 4 zusätzlich mit einer 0,1-0,2 mm dicken Schicht (hier nicht dargestellt) aus Nickeloxid-Zirkoniumoxid bzw. Nickeloxid beschichtet, das beim späteren Brennstoffzellenbetrieb zu metallischen Nickel reduziert wird. Die isolierenden Schichten 6, welche die untereinander angeordneten kammförmigen Leiterbahnen 4 voneinander trennen, sind aus Sinterglaskeramik oder einem Spinell hergestellt. Das Material ist ebenfalls gasdicht. Der Träger 2 wird unter Verwendung des oben beschriebenen Materials mittels Extrusionsverfahren hergestellt. Die Leiterbahnen 4 und die Isolierschichten 6 werden mittels Siebdruckverfahren auf die Oberflächen 2A und 2B des Trägers 2 aufgebracht. Anschließend wird der Träger 2 zusammen mit den Leiterbahnen 4 und den Isolierschichten 6 bei einer Temperatur von 1400 bis 1550 °C gesintert. Hierdurch wird eine dauerhafte Verbindung zwischen den Leiterbahnen 4, den Isolierschichten 6 und dem Träger 2 erzielt.

Jede Brennstoffzelle 1Z ist, wie in Fig. 3 dargestellt, aus drei Schichten 10,11 und 12 aufgebaut. Die Schicht 10, welche als Anode dient, ist aus Nickel/Zirkoniumdioxid Cermet gefertigt. Sie ist porös und etwa 50 bis 200 µm dick. Die Schicht 11, welche als Festelektrolyt dient, ist aus einem gasdichten Werkstoff gefertigt. Sie weist eine Dicke zwischen 50 und 200 µm auf. Zur Ausbildung dieser Schicht 11 wird $(ZrO_2)_{0,9}(Y_2O_3)_{0,1}$ verwendet. Die Schicht 12, welche die Funktion einer Kathode übernimmt, ist aus Strontium dotiertem Lanthanmanganit hergestellt. Sie weist eine Dicke von 0,2 bis 1 mm auf. Zur Herstellung der Schichten 10 bis 12 werden Suspensionen aus den entsprechenden Werkstoffen hergestellt. Es besteht die Möglichkeit, zunächst die als Festelektrolyt dienende Schicht 11 mittels Foliengießverfahren herzustellen und dann auf ihrer ersten Oberfläche 11A eine als Anode dienende Schicht 10 und auf ihrer zweiten Oberfläche 11B eine als Kathode diende Schicht 12 mittels Siebdruck aufzubringen. Die so gefertigten Rohlinge der Brennstoffzellen 1Z werden anschließend bei 1300 bis 1400 °C gesintert, wobei die Schichten 10,11 und 12 dauerhaft miteinander verbunden werden. Die Brennstoffzellen 1Z werden nach ihrer Fertigstellung auf den Oberflächen 2A und 2B des Trägers 2 angeordnet und dauerhaft mit diesem verbunden. Alle Brennstoffzellen 1Z werden so mit dem Träger 2 verbunden, daß die Kathoden 12 der Brennstoffzellen 1Z unmittelbaren Kontakt mit dem Träger 2 haben. Die als Anoden dienenden Schichten 10 sind nach außen weisend angeordnet sind. Die Abmessungen der Brennstoffzellen 1Z sind so gewählt, daß drei äußere Randbereiche der Schicht 12 auf den Abschnitten 4S und 4H einer kammförmigen Leiterbahn 4 angeordnet sind. Durch die Isolierschichten 6 zwischen jeweils zwei kammförmigen Leiterbahnen 4 wird der Kontakt der als Kathoden dienenden Schichten 12 mit den Abschnitten 4H der darunterangeordneten Leiterbahn 4 vermieden. Wie Figur 4 zeigt, ist die Anode 10 einer jeden Brennstoffzelle 1Z über eine elektrisch leitende Schicht 7 mit der kammförmigen Leiterbahn 4, welche unterhalb dieser Brennstoffzelle 1Z angeordnet ist, verbunden. Die Schichten 7 sind jeweils an den Abschnitt 4H der darunterliegenden Leiterbahn 4 elektrisch angeschlossen. Die Leiterschichten 7 sind aus einem Cermet bestehend aus Nickel und Zirkoniumdioxid gefertigt.

Über die Leiterbahnen 4 werden die zu den horizontalen Reihen 10H, 20H, 30H, 40H gehörenden Brennstoffzellen 1Z parallel miteinander verschaltet, während die zu den Reihen 10U, 20U gehörenden Brennstoffzellen 1Z über die Leiterschichten 7 in Serie geschaltet werden. Eine dauerhafte Verbindung der Brennstoffzellen 1Z mit dem Träger 2 wird durch Klebesinterung bewirkt. Hierfür werden, wie Figur 2 zeigt, die Bereiche 8 zwischen den Leiterbahnen 4 und den Isolierschichten 6 mit einer porösen Schicht 9 überzogen, die aus einem elektrisch leitenden Perowskitmischoxid gefertigt ist. Die Schichten 9 werden mittels Siebdruck auf die Oberflächen 2A und 2B des Trägers 2 aufgebracht. Anschließend werden die Brennstoffzellen 1Z, wie in den Fig. 1 und 4 dargestellt, auf den Oberflächen 2A und 2B des Trägers 2 angeordnet und mit dem Träger 2 durch Sintern bei einer Temperatur von 1300 bis 1450 °C dauerhaft verbunden. Damit die Luft bzw. der Sauerstoff, der durch die Hohlräume 2H geleitet wird, nur im Bereich der Kathoden 12 durch den Träger 2 zu den Brennstoffzellen 1Z wandert und nicht an anderen Stellen aus dem Träger 2 austreten kann, werden die Bereiche 2S des Trägers 2, die nicht von gasdichten Leiterbahnen 4 bzw. gasdicht ausgebildeten Isolierschichten 6 bedeckt sind, mit einer Glasur aus Sinterglaskeramik oder Emaille überzcgen.

## Patentansprüche

1. Brennstoffzellenanordnung mit einem porösen, plattenförmigen Träger (2), der von nach außen offenen Hohlräumen (2H) für die Durchleitung von Luft oder Sauerstoff durchsetzt ist und der auf seinen Oberflächen (2A und 2B) wenigstens je eine Brennstoffzelle (1Z) aufweist, dadurch gekennzeichnet, daß auf beiden Oberflächen (2A,2B) des Trägers (2) wenigstens zwei senkrecht untereinander angeordnete Reihen (10H, 20H, 30H, 40H) mit Brennstoffzellen (1Z) angeordnet sind, die über Leiterbahnen (4) eines Netzwerks (5) elektrisch leitend miteinander verschaltet sind.

2. Brennstoffzellenanordnung nach Anspruch 1, dadurch gekennzeichnet, daß die Brennstoffzellen (1Z) einer jeden horizontalen Reihe (10H,20H,30H,40H) parallel und die Brennstoffzellen der senkrechten Reihen( 10U,20U) seriell miteinander verschaltet sind.

3. Brennstoffzellenanordnung nach einem der Ansprüche 1 oder 2, dadurch gekennzeichnet, daß die Kathode (12) einer jeden Brennstoffzelle (1Z) über die Leiterbahnen (4) elektrisch mit der Kathode (12) der jeweils benachbarten Brennstoffzelle (1Z) parallel verschaltet ist.

4. Brennstoffzellenanordnung nach einem der Ansprüche 1 bis 3, dadurch gekennzeichnet, daß jede Brennstoffzelle (1Z) durch das Aufeinanderschichten einer als Anode (10), einer als Festelektrolyt (11) und einer als Kathode (12) dienenden Schicht gebildet ist, und daß die Anoden (10) aller Brennstoffzellen (1Z) nach außen weisend angeordnet und über jeweils eine elektrisch leitende Schicht(7) zur parallelen und/oder seriellen Verschaltung mit den direkt benachbarten Brennstoffzellen (1Z) verbunden sind.

5. Brennstoffzellenanordnung nach einem der Ansprüche 1 bis 4, dadurch gekennzeichnet, daß die Längsachsen der Hohlräume (2H) des Trägers (2) parallel zu den beiden Oberflächen (2A und 2B) des Trägers (2) und zueinander verlaufen, daß der Abstand zwischen den Längsachsen jeweils zweier benachbarter Hohlräume (2H) 1-2 cm beträgt, und sich alle Hohlräume über die gesamte Länge des Trägers (2) erstrecken.

6. Brennstoffzellenanordnung nach einem der Ansprüche 1 bis 5, dadurch gekennzeichnet, daß der Träger (2) aus einem korrosionsbeständigen porösen keramischen Werkstoff gefertigt ist, der bei 1000°C einen thermischen Ausdehnungskoeffizienten von 10 bis $11 \cdot 10^{-6}$ Grad$^{-1}$ aufweist, und daß die Porosität des Trägers (2) 30 bis 45% bezogen auf die theoretische Dichte des Werkstoffs beträgt, daß der Träger(2) aus einem Magnesium-Aluminium Spinell oder einem Zirkoniumdioxid gefertigt ist, das durch Zusatz von 15 Mol% Kalzium- und/oder Magnesiumoxid stabilisiert ist.

7. Brennstoffzellenanordnung nach einem der Ansprüche 1 bis 6, dadurch gekennzeichnet, daß der Träger (2) mittels Extrusionsverfahren gefertigt, und auf seinen Oberflächen (2A und 2B) ein Netzwerk (5) aus Leiterbahnen (4) zur seriellen und parallelen Verschaltung der Brennstoffzellen (1Z) ausgebildet ist.

8. Brennstoffzellenanordnung nach einem der Ansprüche 1 bis 7, dadurch geennzeichnet, daß jede Kathode (12) aus Strontium dotiertem Lanthanmanganit ($La_{1-x}Sr_xMnO_3$) mit einer Dikke von 0,2 bis 1 mm gefertigt ist, daß jede als Festelektrolyt dienende Schicht (11) aus Yttrium dotiertem Zirkoniumoxid gefertigt ist und eine Dicke von 0,05-0,25 $\mu$m aufweist, daß alle als Anoden dienenden Schichten (10) aus einem Cermet in Form von Nickel und Yttrium dotiertem Zirkoniumdioxid gefertigt und 50 $\mu$m bis 200 $\mu$m dick sind, daß die Leiterbahnen (4) des Netzwerkes (5) aus einem Perowskitmischoxid in Form von Strontium dotiertem Lanthanchromit oder aus Magnesium oder Kalzium dotiertem Lanthaniumchromit sowie einer weiteren Schicht aus Nickeloxid bzw. Nickeloxid-Zirkonoiumxid gefertigt und die isolierenden Schichten (6) aus Sinterglaskeramik oder einem Spinell hergestellt sind.

9. Verfahren zur Herstellung einer Brennstoffzellenanordnung, insbesondere nach Anspruch 1, dadurch gekennzeichnet, daß die als Anoden (10), als Festelektrolyte (11) und als Kathoden (12) dienenden Schichten mit Hilfe eines Foliengieß- und /oder-Siebdruckverfahrens hergestellt und jeweils eine als Anode, eine als Festelektrolyt und eine als Kathode dienende Schicht (10,11,12) übereinander angeordnet und zur dauerhaften Verbindung bei 1350 bis 1450°C gesintert werden.

10. Verfahren zur Herstellung einer Brennstoffzellenanordnung, dadurch gekennzeichnet, daß der Träger (2) mittels Extrusionsverfahren hergestellt wird, und auf seinen beiden Oberflächen (2A und 2B) isolierende Schichten (6) sowie ein Netzwerk (5) bildende elektrische Leiterbahnen (4) mittels Siebdruckverfahren aufgetragen werden, daß der Träger (2) zusammen mit den aufgetragenen Schichten (6) und den Leiterbahnen (4) bei 1400 bis 1550°C gesintert wird, daß der Träger(2) zur dauerhaften Verbindung mit den Brennstoffzellen (1Z) auf seinen Oberflächen (2A und 2B) in den von Isolierschichten (3) und Leiterbahnen (4) freien Bereichen (8) mit je einer Schicht (9) aus einem elektrisch leitenden Perowskitmischoxid in Form von La(Sr)NiO$_3$ oder La(Ca)Cr$_x$Mn$_y$O$_3$

mittels Siebdruckverfahren beschichtet wird, und daß die Brennstoffzellen (1Z) in diesen Bereichen (8) angeordnet und zusammen mit dem Träger (2) zur dauerhaften Verbindung bei 1300 bis 1450°C gesintert werden.

# Fig.1

# Fig.4

## Fig. 2

## Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 922 970 (WESTINGHOUSE ELECTRIC CORP.) <br> * Figuren 2,3; Patentansprüche 1,9,12,15; Seite 2, Absatz 4 - Seite 3, Absatz 1; Seite 4, Absatz 4 - Seite 5, Absatz 1; Seite 7, Absatz 2 - Seite 8, Absatz 1; Seite 9, Absätze 2-3 * | 1,6 | H 01 M 8/24 |
| A | PATENT ABSTRACTS OF JAPAN, Band 5, Nr. 153 (E-76)[825], 26. September 1981; <br> & JP-A-56 84 882 (MATSUSHITA DENKI SANGYO) 10-07-1981 <br> * Zusammenfassung * | 1 | |
| A | PATENT ABSTRACTS OF JAPAN, Band 13, Nr. 401 (E-816)[3749], 6. September 1989; <br> & JP-A-1 144 570 (MITSUBISHI HEAVY IND.) 06-06-1989 <br> * Zusammenfassung * | 1 | |
| A | PATENT ABSTRACTS OF JAPAN, Band 14, Nr. 120 (E-899)[4063], 6. März 1990; <br> & JP-A-1 315 960 (MITSUBISHI HEAVY IND.) 20-12-1989 <br> * Zusammenfasssung * | 1 | |
| A | FR-A-2 347 783 (BROWN & BOVERI) | | RECHERCHIERTE SACHGEBIETE (Int. Cl.5) <br><br> H 01 M |
| A | US-A-3 525 646 (H. TANNENBERGER et al.) | | |
| A | US-A-3 554 803 (A.H. POIRIER) | | |
| X | US-A-4 799 936 (B. RILEY) <br> * Figur 2; Patentanspruch 2; Spalte 2, Zeilen 50-53; Spalte 3, Zeilen 13-29; Spalte 4, Zeilen 1-5 * | 9 | |
| P,X | DE-A-4 033 284 (BROWN & BOVERI) <br> * Seite 5, Zeilen 13-22,32-59; Figur 8 * | 9 | |

**Der vorliegende Recherchenbericht wurde für alle Patentansprüche erstellt**

| Recherchenort | Abschlußdatum der Recherche | Prüfer |
|---|---|---|
| Den Haag | 18 Juli 91 | D'HONDT J.W. |